# EUROPÄISCHE PATENTSCHRIFT

(11) **EP 2 083 180 B1**
(45) Veröffentlichungstag und Bekanntmachung des Hinweises auf die Patenterteilung: **21.03.2012**
(21) Anmeldenummer: 09150285.6
(22) Anmeldetag: 09.01.2009
(51) Int. Cl.: F16B 13/14

(54) **Verbindungselement und Leichtbauplatte**
Connecting element and light board
Elément de liaison et panneau de construction léger

(30) Priorität: 25.01.2008 DE 202008001094 U
(43) Veröffentlichungstag der Anmeldung: 29.07.2009
(73) Patentinhaber: Hettich-Heinze GmbH & Co. KG, 32139 Spenge (DE)
(72) Erfinder: Schael, Oliver, 32278 Kirchlengern (DE); Andschus, Stefan, 32312 Lübbecke (DE); Gorges, Alexander, 33790 Halle/Westf. (DE); Sobolewski, Uwe, 32257 Bünde (DE)
(74) Vertreter: Dantz, Jan Henning

(56) Entgegenhaltungen:
- EP-A1- 0 273 515
- WO-A1-2006/106131
- GB-A- 2 088 003
- US-A- 3 716 092

## Beschreibung

Die vorliegende Erfindung betrifft ein Verbindungselement, insbesondere einen Dübel für eine Leichtbauplatte, mit einem Bolzen, an dem Befestigungsmittel montierbar sind und an dem mindestens ein Klebstoffreservoir ausgebildet ist, wobei das Klebstoffreservoir zumindest teilweise von einer Schutzhülle umgeben ist, sowie eine Leichtbauplatte. Ein solches Verbindungselement ist aus der US 3,716,092 bekannt.

Die WO 2006/106131 A1 offenbart einen Verbindungseinsatz für Leichtbauplatten, bei dem eine Außenhülse und ein Klebstoffzuführkanal aufweisendes Innenteil vorgesehen sind. Durch das Innenteil kann Klebstoff in den Verbindungseinsatz eingebracht werden, um diesen dann in einer Aussparung zu verkleben. Ein solches Verkleben von Verbindungseinsätzen hat sich an sich bewährt, allerdings ist es erforderlich, dass über eine Klebstoffdüse separat Klebstoff zugeführt werden muss und bei der Montage immer ein entsprechendes Gerät verfügbar sein muss.

Die EP 919 733 offenbart einen Dübel zur Befestigung von Möbelbeschlagsteilen, bei dem eine mit Klebstoff gefüllte Kapsel im Dübel angeordnet ist. Durch eine seitliche Anpresskraft wird die Kapsel zerstört und der Klebstoff kann zum Verkleben des Dübels eingesetzt werden. Nachteilig ist dabei, dass zum Zerstören der Kapsel erforderliche Anpresskräfte erreicht werden müssen, da die Kapsel ansonsten nicht zerstört wird. Zudem ist die Verteilung des Klebstoffes relativ ungenau was das Klebeergebnis nachteilig beeinflussen kann.

Es ist daher Aufgabe der vorliegenden Erfindung ein Verbindungselement und eine Leichtbauplatte zu schaffen, die ein einfaches Verkleben des Verbindungselementes, insbesondere mit einer Leichtbauplatte ermöglichen.

Diese Aufgabe wird mit einem Verbindungselement mit den Merkmalen des Anspruches 1 sowie einer Leichtbauplatte mit den Merkmalen des Anspruches 13 gelöst.

Erfindungsgemäß umfasst das Verbindungselement eine Schutzhülle, die unter Wärmeeinwirkung schrumpft, wobei das Klebstoffreservoir durch ein Schrumpfen der Schutzhülle im Wesentlichen entleerbar ist. Dadurch kann das Verbindungselement als vormontierte Einheit mit einem Klebstoffreservoir eingebaut werden, das durch Wärmeeinwirkung aktivierbar ist. Dies erleichtert die Montage und Festlegung des Verbindungselementes an oder in einem Bauteil.

Gemäß einer bevorzugten Ausgestaltung der Erfindung umgibt das Klebstoffreservoir den Bolzen zumindest bereichsweise ringförmig, so dass auch eine ringförmige Verteilung des Klebstoffes beim Verkleben möglich ist. Dabei kann auch die Schutzhülle das Klebstoffreservoir ringförmig umgeben, so dass durch Radialkräfte beim Schrumpfen der Schutzhülle das Klebstoffreservoir ausgepresst wird.

Vorzugsweise ist der Klebstoff als Thermoplast ausgebildet, der unter Wärmeeinwirkung schmilzt. Dabei kann es sich um einen thermoplastischen Einkomponentenklebstoff handeln, der durch Zuführung von Energie erhitzt wird, beispielsweise durch elektromagnetische oder elektrische Wechselfelder, über ein Mikrowellenverfahren, oder über anders geartete Heizquellen.

Gemäß einer weiteren Ausgestaltung der Erfindung liegt die Erweichungstemperatur des Klebstoffes oberhalb der Schrumpftemperatur der Schutzhülle. Dadurch wird gewährleistet, dass bei einem Erwärmen der Einheit aus Klebstoff und Schutzhülle der Klebstoff nicht zu stark erhitzt und zu dünnflüssig wird, bevor die Wärmeenergie an die umgebende Schutzhülse abgegeben wird. Dann wird durch die Schutzhülle der Klebstoff nach dem Verflüssigen aus dem Reservoir gepresst.

Damit das Klebstoffreservoir zumindest weitgehend entleert wird und die Schutzhülle ausreichend zusammengezogen wird, beträgt das Schrumpfverhältnis der Schutzfolie mindestens 2 zu 1, vorzugsweise mehr als 4 zu 1. Im geschrumpften Zustand ist die Schutzhülle dadurch wesentlich kleiner als vor dem Schrumpfen. Dabei ist es vorteilhaft, wenn die Schutzhülle im Wesentlichen sich in radiale Richtung zusammenzieht und das Schrumpfverhältnis sich auf den Umfang bezieht. Die Längserstreckung der Schutzhülle bleibt dabei im Wesentlichen konstant.

Vorzugsweise weist der Bolzen einen Bolzenkopf auf, der scheibenförmig ausgebildet ist und in eine Aussparung eines Gegenstandes im Wesentlichen formschlüssig einfügbar ist.

An dem Bolzen können im Bereich eines Bolzenschaftes Längskanäle zur Verteilung des Klebstoffes ausgebildet sein. Dies gewährleistet, dass der Austritt des Klebstoffes aus dem Klebstoffreservoir beim Schrumpfen gezielt an vorbestimmten Positionen erfolgt. Dabei können an dem Bolzenkopf auf der zu dem Bolzenschaft gewandten Seite radiale Kanäle zur Verteilung des Klebstoffes vorgesehen sein.

Wenn der Bolzen die Schutzhülle überragt, vorzugsweise um 0,2 bis 1,2 mm, wird gewährleistet, dass bei einem Schrumpfen der Schutzhülle der Klebstoff in dem Spalt zwischen der Schutzhülle und einem benachbarten Gegenstand austreten kann. Der ringförmige Spalt kann dabei eine Breite zwischen 0,2 bis 1,2 mm aufweisen, wodurch eine zielgenaue Positionierung des Klebstoffes erreicht wird.

Vorzugsweise liegt die Schmelztemperatur des Klebstoffes und die Schrumpftemperatur der Schutzhülle in einem Bereich zwischen 85°C und 135°C. Denn meist wird das Verbindungselement bei Materialien verklebt werden, die Holzwerkstoffe, Papier und/oder Kunststoff enthalten und die Schmelz- und Schrumpftemperatur sollte daher nicht zu hoch ausfallen.

Erfindungsgemäß wird auch eine Leichtbauplatte mit zwei äußeren Deckschichten, zwischen denen eine Zwischenlage mit Hohlräumen angeordnet ist, bereitgestellt, bei der mindestens ein erfindungsgemäßes Verbindungselement montiert ist. Das Verbindungselement kann dabei mit der oberen und der unteren Deckschicht verklebt sein, so dass das Verbindungselement eine effektive Befestigung weiterer Bauteile, beispielsweise von Beschlagsteilen ermöglicht. Das Verbindungselement kann dabei auf einfache Weise an der Leichtbauplatte montiert werden, in dem eine Aussparung gebildet wird und das Verbindungselement mit einer Stirnseite des Bolzens bis zu einer Innenseite einer Deckschicht in die Aussparung eingefügt wird. Anschließend wird über Wärmeeinwirkung die Schutzhülle geschrumpft und der Klebstoff gezielt im Bereich der oberen und unteren Deckschicht herausgedrückt, um ein sicheres Verkleben des Verbindungseleinentes in der Leichtbauplatte zu gewährleisten.

Die Erfindung wird nachfolgen anhand eines Ausführungsbeispieles mit Bezug auf die beigefügten Zeichnungen näher erläutert. Es zeigen:

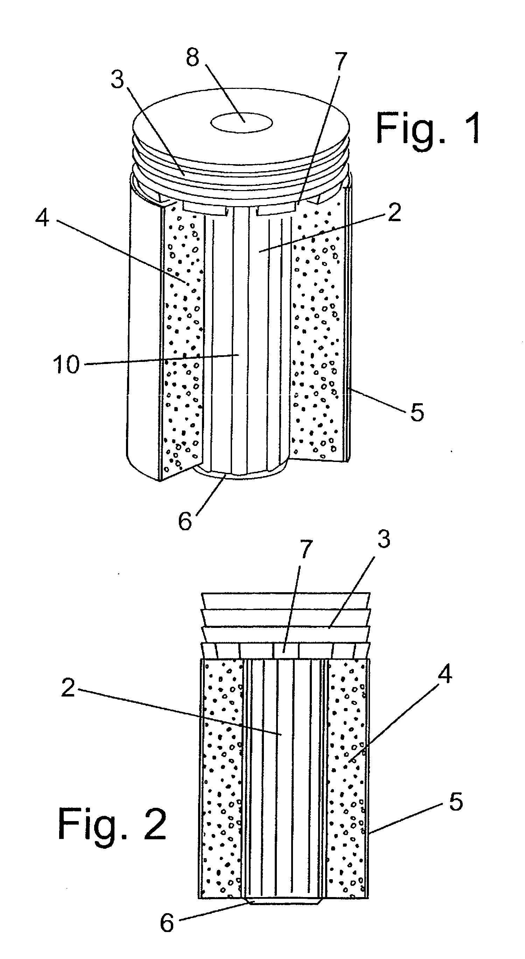

- Figur 1: eine perspektivische geschnittene Ansicht eines erfin- dungsgemäßen Verbindungselementes;
- Figur 2: eine geschnittene Seitenansicht des Verbindungselementes der Figur 1;
- Figuren 3A bis 3C: mehrere Ansichten des Verbindungselementes der Figur 1 bei der Montage, und
- Figuren 4A und 4B: zwei Ansichten des Bolzens des Verbindungselementes der Figur 1.

Ein Verbindungselement 1 umfasst einen Bolzen 2, der integral mit einem Bolzenkopf 3 ausgebildet ist. Benachbart zu dem Bolzenkopf 3 und einem Bolzenschaft 10 ist ein ringförmiges Klebstoffreservoir 4 ausgebildet, das von einer ringförmigen Schutzhülle 5 umgeben ist. Die Schutzhülle 5 und das Klebstoffreservoir 4 erstrecken sich von dem Bolzenkopf 3 bis kurz vor einen Endabschnitt 6 des Bolzens 2.

Der Bolzen 2 kann dabei aus Kunststoff und/oder Metall hergestellt sein. Der Klebstoff ist vorzugsweise als thermoplastischer Einkomponentenklebstoff ausgebildet, der durch Wärmeeinwirkung schmelzbar ist. Dabei kann der Klebstoff durch Beimischung entsprechender Füllmaterialien, vorzugsweise pulverförmige Partikel mit einer Größe von kleiner 500 nm ferromagnetische, ferrimagnetische oder piezoelektrische Eigenschaften aufweisen. Dann kann die Erwärmung des Klebstoffes über elektromagnetische oder elektrische Wechselfelder erfolgen. Auch eine Wärmeeinleitung über den Bolzen ist möglich, insbesondere wenn der Bolzen aus entsprechenden Materialien besteht.

Die Schutzhülle 5 um das Klebstoffreservoir 4 besteht aus einem schrumpfbaren Material, vorzugsweise eine Folie aus Polyolefin oder Polyvinylidenfluorid, gegebenenfalls auch aus PTFE oder einem Fluorelastomer.

An dem Bolzenkopf 3 sind auf der Seite des Klebstoffreservoirs 4 radiale Kanäle 7 zur Verteilung des Klebstoffes ausgebildet. Ferner ist ein Schraubkanal 8 in dem Bolzenkopf 3 und dem Bolzenschaft 10 ausgebildet, der zur Befestigung weiterer Bauteile, wie Schraubbolzen dient, so dass an dem Verbindungselement 1 insbesondere Beschlagsteile befestigt werden können.

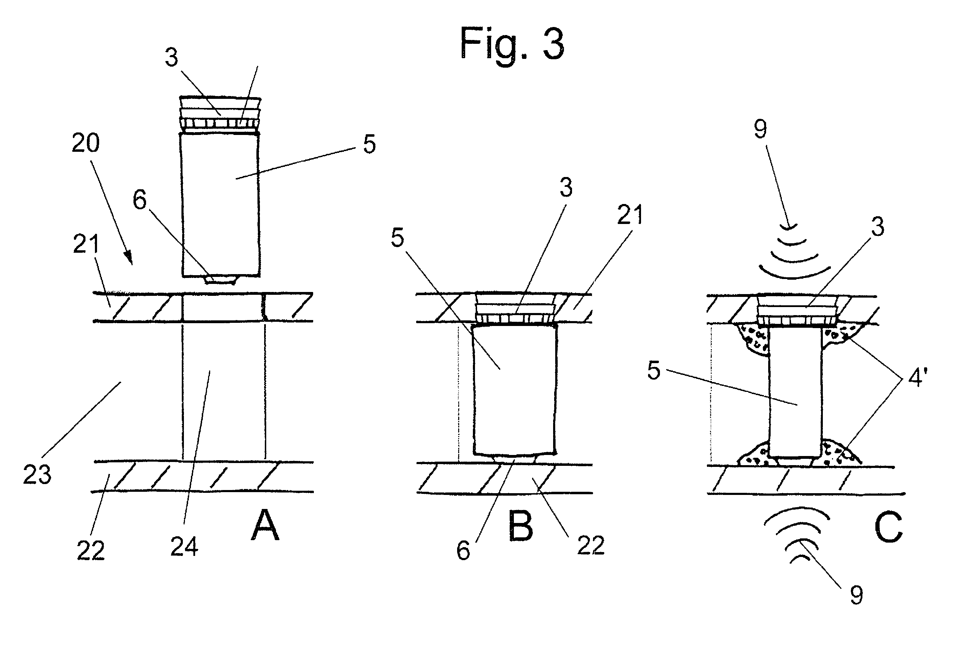

Das Verbindungselement 1 dient insbesondere zur Befestigung von Bauteilen an einer Leichtbauplatte 20. Zur Montage des Verbindungselementes 1 wird entsprechend Figur 3A zunächst eine Aussparung 24 an einer Leichtbauplatte 20 hergestellt, die eine erste Deckschicht 21 und eine Zwischenlage 23 durchgreift. Die Leichtbauplatte weist ferner eine zweite Deckschicht 22 an der gegenüberliegenden Seite der Zwischenlage 23 auf. Die Deckschichten 21 und 22 können aus Pappe oder holzwerkstoffhaltigen Platten bestehen. Die Zwischenlage 23 weist eine Vielzahl von Hohlräumen auf und kann beispielsweise als Wabenpappe ausgebildet sein.

Das Verbindungselement 1 wird dann in die Aussparung 24 eingefügt (Figur 3B) bis eine Stirnseite des Endabschnittes 6 des Bolzens 2 an der Innenseite der Deckschicht 22 anliegt. In dieser Position ist eine Oberseite des Bolzenkopfes 3 im Wesentlichen bündig mit einer äußeren Oberfläche der Deckplatte 21 ausgerichtet. Dabei sind an dem Bolzenkopf 3 am äußeren Umfang mehrere Rippen oder ein Gewinde ausgebildet, so dass der Bolzenkopf 3 im Wesentlichen formschlüssig in der kreisförmigen Öffnung der Deckplatte 21 eingefügt ist und dort vorfixiert gehalten werden kann.

Um das Verbindungselement 1 in der Leichtbauplatte 20 zu verkleben, wird nun über eine Wärme- oder Energiequelle 9 Wärme zum Erhitzen des Klebstoffes 4 und der Schutzhülle 5 eingebracht. Dies kann durch elektromagnetische oder elektrische Wechselfilter, durch eine Mikrowelle oder andere Heizquellen erfolgen. Wenn der Klebstoff 4 erwärmt wird, wird gleichzeitig auch die umgebende Schutzhülle 5 erwärmt. Die Schutzhülle 5 ist aus schrumpfbarem Material hergestellt und zieht sich zusammen, sobald die Schrumpftemperatur erreicht oder überschritten wird und der Klebstoff 4 soweit geschmolzen ist, dass dieser aus den benachbart zum Bolzenkopf 3 angeordneten radialen Kanäle 7 und durch den ringförmigen Spalt zwischen der Schutzhülle 5 und der Innenseite der Deckschicht 22 strömen kann.

In Figur 3C ist das Verbindungselement 1 im verklebten Zustand gezeigt. Durch das Schrumpfen der Schutzhülle 5 in radialer Richtung ist das ringförmige Klebstoffreservoir 4 ausgepresst worden, wobei ein Teil des Klebstoffes durch die radialen Strömungskanäle 7 an dem Bolzenkopf 3 ausgetreten ist und entsprechend der Klebstoffverteilung 4' eine Klebeverbindung zwischen dem Verbindungselement 1 und der Deckschicht 21 bereitstellt.

Ferner ist ein Teil des Klebstoffes durch den Spalt zwischen Schutzhülle 5 und Innenwand der Deckschicht 22 ausgetreten und verklebt entsprechend der Klebstoffverteilung 4' den Bolzenschaft 10 mit der Schutzhülle 5 mit der Deckschicht 22. Dadurch wird eine relativ stabile Befestigung des verklebten Verbindungselementes in der Leichtbauplatte 20 erreicht. An dem Verbindungselement 1 können nun an dem Schraubkanal 8 weitere Bauteile befestigt werden.

Beim Verkleben des Verbindungselementes 1 ist die Schrumpftemperatur der Schutzhülle und die Schmelztemperatur des Klebstoffes dabei so gewählt, dass genügend Energie vom erwärmten Material, wie dem Bolzenschaft 10 und/oder dem Klebstoff 4 an die Schutzhülle 5 abgegeben wird, ohne die Schutzhülle 5 an die Grenzen der Temperaturbeständigkeit zu bringen. Vorteilhaft ist hierbei, wenn die Schrumpftemperatur unter der Erweichungstemperatur des Klebstoffes liegt, beispielsweise etwa 5°C bis 25°C geringer ist. Dadurch ist gewährleistet, dass der Klebstoff hier nicht zu stark erhitzt und somit zu dünnflüssig wird, bevor er seine Wärmeenergie an die Schutzhülle abgibt und die Schrumpfung erfolgt.

Da es sich bei den zu verbindenden Materialien meist um Holzwerkstoffe, Papier und/oder Kunststoff handelt ist auch die Schmelztemperatur des Klebstoffes 4 bzw. die Schrumpftemperatur der Schutzhülle 5 entsprechend zu wählen, also in einem Bereich zwischen 85°C und 135°C. Bei Leichtbauplatten mit metallischen Deckschichten können je nach Wärmebeständigkeit der Zwischenlagen auch Klebstoffe mit höherer Schmelztemperatur gewählt werden.

Das Schrumpfverhältnis der Schutzhülle 5 beträgt vorzugsweise mindestens 2 zu 1, vorzugsweise mehr als 4 zu 1 oder 6 zu 1, so dass sich die Schutzhülle 5 in radiale Richtung zusammenzieht. In axiale Richtung des Bolzenschaftes 10 findet kein Schrumpfen statt, um das Austreten des Klebstoffes 4 aus dem Klebstoffreservoir zielgenau gestalten zu können.

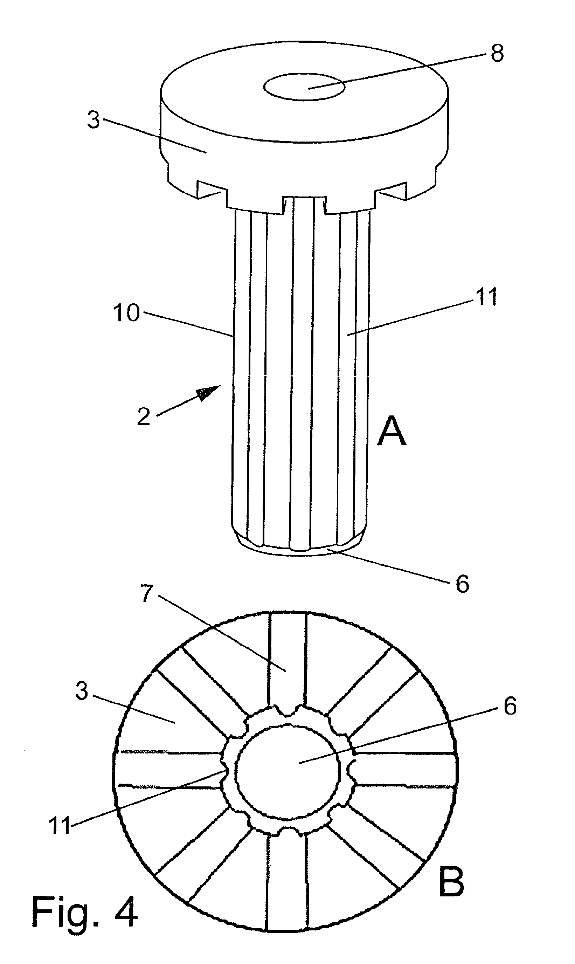

In den Figuren 4A und 4B ist der Bolzen 2 im Detail dargestellt. An dem Bolzenschaft 10 sind mehrere in Längsrichtung verlaufende Kanäle 11 ausgebildet, die für eine bessere Verteilung des Klebstoffes sorgen. Die Kanäle 11 münden dabei in die radialen Kanäle 7 an dem Bolzenkopf 3.

In dem dargestellten Ausführungsbeispiel ist das Klebstoffreservoir 4 ringförmig um den Bolzenschaft 10 angeordnet. Es ist natürlich auch möglich, mehr als ein Klebstoffreservoir an dem Verbindungselement vorzusehen, wobei das Klebstoffreservoir auch eine andere Form besitzen kann.

Statt dem Schraubkanal 8 in dem Bolzen 2 können auch andere Befestigungsmittel an dem Verbindungselement 1 vorgesehen sein, beispielsweise kann auch ein von dem Verbindungselement 1 hervorstehendes Bauteil zur Befestigung vorhanden sein.

In dem dargestellten Ausführungsbeispiel wird die Schutzhülle 5 und das Klebstoffreservoir als "ringförmig" bezeichnet, wobei dieser Begriff auch lang gestreckte zylinderförmige Formen einschließen soll.

## Patentansprüche

1. Verbindungselement (1), insbesondere Dübel für eine Leichtbauplatte (20), mit einem Bolzen (2), an dem Befestigungsmittel montierbar sind und an dem mindestens ein Klebstoffreservoir (4) ausgebildet ist, wobei das Klebstoffreservoir (4) zumindest teilweise von einer Schutzhülle (5) umgeben ist, **dadurch gekennzeichnet, dass** die Schutzhülle (5) unter Wärmeeinwirkung schrumpft und das Klebstoffreservoir (4) durch ein Schrumpfen der Schutzhülle (5) im Wesentlichen entleerbar ist.

2. Verbindungselement nach Anspruch 1, **dadurch gekennzeichnet, dass** das Klebstoffreservoir (4) den Bolzen (2) zumindest bereichsweise ringförmig umgibt.

3. Verbindungselement nach Anspruch 1 oder 2, **dadurch gekennzeichnet, dass** die Schutzhülle (5) das Klebstoffreservoir (4) ringförmig umgibt.

4. Verbindungselement nach einem der Ansprüche 1 bis 3, **dadurch gekennzeichnet, dass** der Klebstoff als Thermoplast ausgebildet ist, der unter Wärmeeinwirkung schmilzt.

5. Verbindungselement nach einem der Ansprüche 1 bis 4, **dadurch gekennzeichnet, dass** die Erweichungstemperatur des Klebstoffs (4) oberhalb der Schrumpftemperatur der Schutzhülle (5) liegt.

6. Verbindungselement nach einem der Ansprüche 1 bis 5, **dadurch gekennzeichnet, dass** das Schrumpfverhältnis der Schutzhülle (5) mindestens 2 zu 1, vorzugsweise mehr als 4 zu 1 beträgt.

7. Verbindungselement nach einem der Ansprüche 1 bis 6, **dadurch gekennzeichnet, dass** der Bolzen (2) einen Bolzenkopf (3) aufweist, der scheibenförmig ausgebildet ist.

8. Verbindungselement nach einem der Ansprüche 1 bis 7, **dadurch gekennzeichnet, dass** an dem Bolzen (2) im Bereich eines Bolzenschaftes (10) Längskanäle (11) zur Verteilung des Klebstoffes (4) ausgebildet sind.

9. Verbindungselement nach Anspruch 7, **dadurch gekennzeichnet, dass** an dem Bolzenkopf (3) auf der zu einem Bolzenschaft (10) gewandten Seite radiale Kanäle (7) zur Verteilung des Klebstoffes (4) ausgebildet sind.

10. Verbindungselement nach einem der Ansprüche 1 bis 9, **dadurch gekennzeichnet, dass** der Bolzen (2) die Schutzhülle (5) überragt, vorzugsweise um 0,2 bis 1,2 mm.

11. Verbindungselement nach einem der Ansprüche 1 bis 10, **dadurch gekennzeichnet, dass** die Schmelztemperatur des Klebstoffes und die Schrumpftemperatur der Schutzhülle in einem Bereich zwischen 85°C bis 135°C liegen.

12. Verbindungselement nach Anspruch 7, **dadurch gekennzeichnet, dass** der äußere Umfang des Bolzenkopfes (3) mehrere Rippen hat oder ein Gewinde aufweist.

13. Leichtbauplatte mit zwei äußeren Deckschichten, zwischen denen eine Zwischenlage mit Hohlräumen angeordnet ist, **dadurch gekennzeichnet, dass** mindestens ein Verbindungselement nach einem der vorhergehenden Ansprüche an der Leichtbauplatte montiert ist.

14. Leichtbauplatte nach Anspruch 12, **dadurch gekennzeichnet, dass** die obere und untere Deckschicht mit dem Verbindungselement verklebt sind.

15. Leichtbauplatte nach Anspruch 12 oder 13, **dadurch gekennzeichnet, dass** der Bolzen mit einer Stirnseite an einer Innenseite einer Deckschicht (21, 22) anliegt.

## Claims

1. Connecting element (1), in particular a dowel for a lightweight construction panel (20), comprising a bolt (2) on which fastening means can be mounted and on which at least one adhesive reservoir (4) is formed, wherein the adhesive reservoir (4) is at least partially enclosed by a protective sleeve (5), **characterized in that** the protective sleeve (5) shrinks under the effect of heat and the adhesive reservoir (4) can be substantially emptied through a shrinkage of the protective sleeve (5).

2. Connecting element according to Claim 1, **characterized in that** the adhesive reservoir (4) annularly encloses the bolt (2) at least in certain regions.

3. Connecting element according to Claim 1 or 2, **characterized in that** the protective sleeve (5) annularly encloses the adhesive reservoir (4).

4. Connecting element according to one of Claims 1 to 3, **characterized in that** the adhesive takes the form of a thermoplastic which melts under the effect of heat.

5. Connecting element according to one of Claims 1 to 4, **characterized in that** the softening temperature of the adhesive (4) lies above the shrinkage temperature of the protective sleeve (5).

6. Connecting element according to one of Claims 1 to 5, **characterized in that** the shrinkage ratio of the protective sleeve (5) is at least 2 to 1, preferably more than 4 to 1.

7. Connecting element according to one of Claims 1 to 6, **characterized in that** the bolt (2) has a bolt head (3) which is of disc-shaped design.

8. Connecting element according to one of Claims 1 to 7, **characterized in that** longitudinal channels (11) for distributing the adhesive (4) are formed on the bolt (2) in the region of a bolt shank (10).

9. Connecting element according to Claim 7, **characterized in that** radial channels (7) for distributing the adhesive (4) are formed on the bolt head (3) on the side facing a bolt shank (10).

10. Connecting element according to one of Claims 1 to 9, **characterized in that** the bolt (2) projects beyond the protective sleeve (5), preferably by 0.2 to 1.2 mm.

11. Connecting element according to one of Claims 1 to 10, **characterized in that** the melting temperature of the adhesive and the shrinkage temperature of the protective sleeve lie in a range between 85°C and 135°C.

12. Connecting element according to Claim 7, **characterized in that** the outer periphery of the bolt head (3) has a plurality of ribs or comprises a thread.

13. Lightweight construction panel having two outer cover layers between which an intermediate layer having cavities is arranged, **characterized in that** at least one connecting element according to one of the preceding claims is mounted on the lightweight construction panel.

14. Lightweight construction panel according to Claim 12, **characterized in that** the upper and lower cover layers are adhesively bonded to the connecting element.

15. Lightweight construction panel according to Claim 12 or 13, **characterized in that** the bolt bears by an end side against an inner side of a cover layer (21, 22).

## Revendications

1. Elément de liaison (1), en particulier cheville pour un panneau de construction léger (20), avec un boulon (2), sur lequel des moyens de fixation peuvent être montés et sur lequel au moins un réservoir de colle (4) est réalisé, sachant que le réservoir de colle (4) est entouré au moins partiellement d'une enveloppe protectrice (5), **caractérisé en ce que** l'enveloppe protectrice (5) se contracte sous l'effet de la chaleur et le réservoir de colle (4) peut être sensiblement vidé par une contraction de l'enveloppe protectrice (5).

2. Elément de liaison selon la revendication 1, **caractérisé en ce que** le réservoir de colle (4) entoure au moins par endroits le boulon (2) comme un anneau.

3. Elément de liaison selon la revendication 1 ou 2, **caractérisé en ce que** l'enveloppe protectrice (5) entoure le réservoir de colle (4) comme un anneau.

4. Elément de liaison selon l'une quelconque des revendications 1 à 3, **caractérisé en ce que** la colle est réalisée comme un thermoplaste qui fond sous l'effet de la chaleur.

5. Elément de liaison selon l'une quelconque des revendications 1 à 4, **caractérisé en ce que** la température d'amollissement de la colle (4) est supérieure à la température de contraction de l'enveloppe protectrice (5).

6. Elément de liaison selon l'une quelconque des revendications 1 à 5, **caractérisé en ce que** le rapport de contraction de l'enveloppe protectrice (5) s'élève au moins à 2:1, de préférence est supérieur à 4:1.

7. Elément de liaison selon l'une quelconque des revendications 1 à 6, **caractérisé en ce que** le boulon (2) présente une tête de boulon (3) réalisée en forme de disque.

8. Elément de liaison selon l'une quelconque des revendications 1 à 7, **caractérisé en ce que** des canaux longitudinaux (11) sont réalisés pour la répartition de la colle (4) sur le boulon (2) dans la zone d'un corps de boulon (10).

9. Elément de liaison selon la revendication 7, **caractérisé en ce que** des canaux radiaux (7) sont réalisés pour la répartition de la colle (4) sur la tête de boulon (3) sur le côté tourné vers un corps de boulon (10).

10. Elément de liaison selon l'une quelconque des revendications 1 à 9, **caractérisé en ce que** le boulon (2) dépasse de l'enveloppe protectrice (5), de préférence de 0,2 à 1,2 mm.

11. Elément de liaison selon l'une quelconque des revendications 1 à 10, **caractérisé en ce que** la température de fonte de la colle et la température de contraction de l'enveloppe protectrice sont comprises dans une plage entre 85 et 135°C.

12. Elément de liaison selon la revendication 7, **caractérisé en ce que** la périphérie extérieure de la tête de boulon (3) présente plusieurs nervures ou un filetage.

13. Panneau de construction léger avec deux couches de recouvrement extérieures, entre lesquelles est disposée une couche intermédiaire dotée d'espaces creux, **caractérisé en ce qu'**au moins un élément de liaison selon l'une quelconque des revendications précédentes est monté sur le panneau de construction léger.

14. Panneau de construction léger selon la revendication 12, **caractérisé en ce que** la couche de recouvrement supérieure et la couche de recouvrement inférieure sont collées à l'élément de liaison.

15. Panneau de construction léger selon la revendication 12 ou 13, **caractérisé en ce que** le boulon repose par un côté frontal contre un côté intérieur d'une couche de recouvrement (21, 22).
